(19) Europäisches Patentamt
European Patent Office
Office européen des brevets

(11) EP 3 820 922 B1

(12) # EUROPÄISCHE PATENTSCHRIFT

(45) Veröffentlichungstag und Bekanntmachung des Hinweises auf die Patenterteilung:
**21.09.2022 Patentblatt 2022/38**

(21) Anmeldenummer: **19734433.6**

(22) Anmeldetag: **04.07.2019**

(51) Internationale Patentklassifikation (IPC):
***C08G 18/48*** $^{(2006.01)}$ ***C08G 18/76*** $^{(2006.01)}$
***C08G 18/18*** $^{(2006.01)}$ ***C08G 18/20*** $^{(2006.01)}$
***C08G 18/22*** $^{(2006.01)}$ ***C08G 18/30*** $^{(2006.01)}$
***C08G 101/00*** $^{(2006.01)}$

(52) Gemeinsame Patentklassifikation (CPC):
**C08G 18/7621; C08G 18/1833; C08G 18/2027; C08G 18/222; C08G 18/302; C08G 18/4812; C08G 18/4825; C08G 18/4829;** C08G 2110/0008; C08G 2110/005; C08G 2110/0058; C08G 2350/00

(86) Internationale Anmeldenummer:
**PCT/EP2019/068007**

(87) Internationale Veröffentlichungsnummer:
**WO 2020/011646 (16.01.2020 Gazette 2020/03)**

(54) **VERFAHREN ZUR HERSTELLUNG VON VISKOELASTISCHEN POLYURETHANSCHAUMSTOFFEN**

METHOD FOR THE PREPARATION OF VISCOELASTIC POLYURETHANE FOAMS

PROCÉDÉ DE FABRICATION DE MOUSSES DE POLYURÉTHANE VISCOÉLASTIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.07.2018 EP 18182378**

(43) Veröffentlichungstag der Anmeldung:
**19.05.2021 Patentblatt 2021/20**

(73) Patentinhaber: **Covestro Intellectual Property GmbH & Co. KG**
**51373 Leverkusen (DE)**

(72) Erfinder:
- **GOSSNER, Matthaeus**
**51061 Köln (DE)**
- **FAERBER, Veronica-Alina**
**51467 Bergisch Gladbach (DE)**
- **BRASSAT, Lutz**
**51375 Leverkusen (DE)**

(74) Vertreter: **Levpat**
**c/o Covestro AG**
**Gebäude 4825**
**51365 Leverkusen (DE)**

(56) Entgegenhaltungen:
**JP-B2- 5 542 324 US-A1- 2015 045 466**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 820 922 B1

## Beschreibung

Der Gegenstand der vorliegenden Erfindung betrifft ein Verfahren zur Herstellung von Polyurethanschaumstoffen, bevorzugt von viskoelastischen, insbesondere viskoelastischen und offenzelligen, Polyurethanschaumstoffen auf Polyetherpolyol- und Toluylendiisocyanatbasis, wobei die resultierenden Polyurethanschaumstoffe ähnliche Eigenschaften wie die bereits bekannten viskoelastischen Polyurethanschaumstoffe aufweisen, diese jedoch in ihrer Herstellung einfacher und nachhaltiger sind.

Viskoelastische Schaumstoffe zeichnen sich durch eine langsame, graduelle Rückverformung nach einer erfolgten Kompression aus. Solche Materialien sind im Stand der Technik wohl bekannt und werden wegen ihrer Energie-absorbierenden Eigenschaften sehr geschätzt. Viskoelastische Schaumstoffmaterialien finden sich in einer Vielzahl von Anwendungsbereichen zur Polsterung (wie zum Beispiel in Kissen, Sitzbezügen, Matratzen usw.), als Schall- und/oder Vibrations-dämpfende Materialien oder auch als Aufprallschutz.

Unter den viskoelastischen Schaumstoffmaterialien besitzen solche aus Polyurethanen sicherlich die größte Bedeutung. Dies liegt zum einen darin begründet, dass sich durch die Wahl der verwendeten Polyol- beziehungsweise Isocyanatkomponenten und gegebenenfalls weiterer Hilfsstoffe die physikalischen Eigenschaften des zu erhaltenden Polyurethanschaumstoffes sehr genau einstellen lassen, zum anderen aber auch daran, dass sich durch die "in situ"-Herstellung (gegebenenfalls vor Ort) Schaumstoffmaterialien nahezu beliebiger und sehr komplexer Form und Struktur herstellen lassen.

Bei der Herstellung von Polyurethanen werden gewöhnlich zwei oder mehrere Flüssigkeitsströme miteinander vereinigt. Die Mischung dieser Flüssigkeitsströme initiiert die Polymerisation und gegebenenfalls das Aufschäumen des polymerisierenden Materials. Polymerisation und Formgebung erfolgen oft in einem Schritt, typischerweise durch Formgebung oder Sprühen der noch im flüssigen Zustand befindlichen Reaktionsmischung. Daneben werden Polyurethane auch oft in Form von Blöcken hergestellt, welche anschließend in die gewünschte Form zurechtgeschnitten werden.

Bei den oben genannten Flüssigkeitsströmen handelt es sich in der Mehrzahl der Fälle auf der einen Seite um eine bi- bzw. polyfunktionelle organische Isocyanatkomponente und auf der anderen Seite um Propylenoxid- oder Ethylenoxid-basierte Polyhydroxyverbindungen, welche Isocyanaten gegenüber eine entsprechende Reaktivität aufweisen und gegebenenfalls weitere Hilfsstoffe enthalten können. Dieses Gemisch umfasst typischerweise zum größten Teil eine oder mehrere Polyolkomponenten.

Um nun einen Polyurethanschaumstoff bestimmter Zusammensetzung zu erhalten, werden die oben beschriebenen Flüssigkeitsströme vor ihrer Vermischung entsprechend dosiert. Ein Aufschäumen wird dabei normalerweise so erreicht, dass der Polyol-Komponente Wasser zugesetzt wird, welche mit dem Polyisocyanat unter Bildung eines Amins und unter Freisetzung von $CO_2$ reagiert, welches wiederum als Treibgas fungiert. Alternativ oder zusätzlich zu der Verwendung von Wasser werden oft auch flüchtige inerte organische Verbindungen oder inerte Gase verwendet.

Die Mehrzahl der konventionellen Polyurethanschaumstoffe stellen Blockcopolymere dar, welche räumlich getrennte Bereiche verschiedener Phasen mit hohen und niedrigen Glasübergangstemperaturen ($T_G$) aufweisen. Die Glasübergangstemperatur trennt dabei den unterhalb von ihr liegenden spröden energieelastischen Bereich (= Glasbereich) von dem oberhalb von ihr liegenden weichen entropieelastischen Bereich (= gummielastischer Bereich). Diese hohen und niedrigen Glasübergangstemperaturen verschiedener Phasen innerhalb des Polymers grenzen normalerweise den Temperaturbereich ein, innerhalb dessen man das besagte Material verwenden kann. Die DMA- ("dynamic mechanical analysis") Spektren solcher Materialien zeichnen sich üblicherweise durch einen relativ flachen Bereich ("modulus plateau") zwischen den verschiedenen Glasübergängen aus.

Die Phase geringer Glasübergangstemperatur in diesen Materialien leitet sich üblicherweise (obwohl nicht immer) von einem "Block" geringer Glasübergangstemperatur ab, welcher vorgeformt wird und anschließend erst der Polymerisation unterworfen wird. Die Phase hoher Glasübergangstemperatur bildet sich demgegenüber normalerweise erst während der Polymerisation, bedingt durch die dann erfolgende Ausbildung der Urethaneinheiten. Der Block geringer Glasübergangstemperatur (oft auch als "Weichblock" bezeichnet) leitet sich üblicherweise von einer Flüssigkeit oder von einem oligomeren Harz geringer Schmelztemperatur ab, welche eine Vielzahl von gegenüber Isocyanateinheiten reaktiven Gruppen enthalten. Polyether- und Polyesterpolyole sind Beispiele solcher oligomeren Harze.

In konventionellen Polyurethanen ordnen sich die harten (hohe Glasübergangstemperatur) und weichen (niedrige Glasübergangstemperatur) Phasen während der Polymerisation zueinander an und trennen sich anschließend spontan voneinander, um voneinander morphologisch verschiedene Phasen innerhalb des "Bulkpolymers" auszubilden. Bei solchen Materialien spricht man entsprechend auch von "phasenseparierten" Materialien.

Viskoelastische Polyurethane stellen in diesem Zusammenhang gewissermaßen einen Spezialfall dar, bei welchen nämlich die oben beschriebene Phasentrennung nur unvollständig oder überhaupt nicht auftritt.

Von einer solchen "Struktur-Viskoelastizität" bei Polyurethanschäumen mit (überwiegend) offenen Zellen zu unterscheiden ist eine solche Viskoelastizität, die auf einen pneumatischen Effekt zurückzuführen ist. In letzterem Falle befinden sich nämlich nahezu geschlossene Zellen innerhalb des Schaumstoffmaterials, also Zellen mit nur einer geringen Öffnung. Aufgrund der geringen Luftdurchlässigkeit der Zellmembranen strömt die Luft nach einer Kompression

nur langsam wieder ein, was eine verlangsamte Rückverformung zur Folge hat.

Es gibt zwei Gruppen von viskoelastischen Polyurethanschaumstoffen, die sich in ihrer Zellstruktur und ihrer Viskoelastizität unterscheiden: Struktur-, oder chemisch-viskoelastische Schaumstoffe und pneumatisch (physikalisch) viskoelastische Schaumstoffe. Die chemisch viskoelastischen Schaumstoffe können sowohl auf TDI (Toluylendiisocyanat)- als auch auf MDI (Methylendiphenylisocyanat)- Basis hergestellt werden und zeichnen sich dadurch aus, dass ihre Glasübergangstemperatur in der Nähe der Raumtemperatur liegt. Viskoelastische Polyurethanschaumstoffe, die mit TDI T 65 und MDI hergestellt werden, zeigen normalerweise eine gemäß den Erfordernissen akzeptable Luftdurchlässigkeit (nach dem Aufdrücken; MDIbasierte Schaumstoffe müssen in der Regel "gewalkt", d.h. aufgedrückt werden). Im Gegensatz zu diesen viskoelastischen Polyurethanschaumstoffen, neigen die mit TDI T 80 hergestellten Polyurethanschaumstoffe zu geschlossenen Zellstrukturen. Die pneumatisch viskoelastischen Schaumstoffe sind stark geschlossenzellig, was einen "Slow-Recovery-Effekt" zur Folge hat. Diese viskoelastischen Schaumstoffe werden durch Umsetzung einer Polyetherpolyol-Komponente mit einem MDI (Methylendiphenylisocyanat) hergestellt. Die Polyetherpolyol-Komponente besteht aus ca. 80 pphp (parts per 100 parts polyol) eines Ethylenoxid-reichen Polyetherpolyols und aus ca. 20 pphp eines Co-Polyetherpolyols, welches überwiegend Propylenoxid-Bausteine enthält. Die vorliegende Erfindung bezieht sich auf die chemisch viskoelastischen Schaumstoffe auf TDI-Basis.

Um viskoelastische Schaumstoffe auf Polyetherpolyol- und Toluylendiisocyanatbasis mit einer gewünschten Offenzelligkeit zu erhalten wurden bisher zwei unterschiedliche Chargen von Toluylendiisocyanatgemischen eingesetzt. Die erste Charge ist eine durch eine einfache Herstellung, nämlich einer Nitrierung und dann Reduktion zum Amin und Phosgenierung, erhältliche Mischung aus 80 Gew.-% 2,4-Toluylendiisocyanat und 20 Gew.-% 2,6-Toluylendiisocyanat. Die zweite Mischung besteht aus 67 Gew.-% 2,4-Toluylendiisocyanat und 33 Gew.-% 2,6-Toluylendiisocyanat und muss um den höheren Gehalt an 2,6-Toluylendiisocyanat zu erhalten kosten- und arbeitsintensiv aufgearbeitet werden. Dabei wird 2,4-Toluylendiisocyanat aus der Mischung auskristallisiert, um den Anteil an 2,6-Toluylendiisocyanat zu erhöhen. Der höhere Gehalt an 2,6-Toluylendiisocyanat war bisher wiederum nötig, um die gewünschte Offenzelligkeit beziehungsweise keinen Schrumpf der Schaumstoffe zu erhalten.

Um zu den gewünschten viskoelastischen Schaumstoffen, mit einem hohen Anteil an 2,6-Toluylendiisocyanat, zu gelangen wurden im Stand der Technik bisher zusätzlich kommerziell erhältliche Verbindungen auf Silikonbasis eingesetzt. Der Einsatz dieser Verbindungen bei reduziertem 2,6-Tolyulendiisocyanatgehalt führte jedoch nicht zu gewünschten viskoelastischen Schaumstoffen, sondern die erhaltenen Schaumstoffe wiesen einen Schrumpf auf.

US2015/045466A1 offenbart ein Verfahren zur Herstellung von Polyurethanschaumstoffen, u.a. durch Umsetzung von Polyetherpolyolen mit einem TDI-Isomerengemisch, Wasser als Treibmittel, sowie Isopropylmyristat oder Caprylic/Capric Triglycerid als Weichmacher.

Aufgabe der vorliegenden Erfindung war es deshalb ein System für viskoelastische und offenzellige Polyurethanschaumstoffe zu finden, in dem der Einsatz der mittels Auskristallisation aufgearbeiteten Charge des Toluylendiisocyanatgemisches verringert oder komplett vermieden werden kann.

Die Erfinder der vorliegenden Erfindung haben dabei überraschend gefunden, dass dies durch den Einsatz spezifischer Carbonsäureester der vorliegenden Erfindung möglich ist. Die so erhaltenen Polyurethanschaumstoffe wiesen eine gleichmäßige Porenstruktur und gute mechanische Eigenschaften auf.

Die Aufgabe der vorliegenden Erfindung wird gelöst durch ein Verfahren zur Herstellung von Polyurethanschaumstoffen, bevorzugt viskoelastischen Polyurethanschaumstoffen, insbesondere viskoelastischen und offenzelligen Polyurethanschaumstoffen, durch Umsetzung von Komponente A) enthaltend eines oder mehrere Polyetherpolyole A1, mit einer Hydroxylzahl gemäß DIN 53240-1:2013-06 von mehr als 120 mg KOH/g,

B) gegebenenfalls
B1) Katalysatoren, und/oder
B2) Hilfs- und Zusatzstoffen
C) Wasser und/oder physikalischen Treibmitteln,
mit
D) Di- und/oder Polyisocyanaten, welche im Wesentlichen aus 2,4-Toluylendiisocyanat und 2,6-Toluylendiisocyanat bestehen, bevorzugt mindestens 95 Gew.-%, stärker bevorzugt mindestens 98 Gew.-% 2,4-Toluylendiisocyanat und 2,6-Toluylendiisocyanat;
wobei die Herstellung bei einer Kennzahl von 70 bis 120 erfolgt,
dadurch gekennzeichnet, dass die Herstellung in Gegenwart mindestens einer Verbindung E erfolgt, die folgende Formel (I) aufweist:

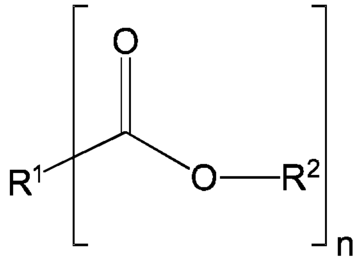

(I)

wobei

$R^1$ ein aromatischer Kohlenwasserstoffrest mit mindestens 5 Kohlenstoffatomen ist oder ein linearer, verzweigter, substituierter oder unsubstituierter aliphatischer Kohlenwasserstoffrest mit mindestens 2, im Falle von verzweigt mindestens 3, Kohlenstoffatomen ist;

$R^2$ ein linearer, verzweigter, substituierter oder unsubstituierter aliphatischer Kohlenwasserstoffrest ist; und

n gleich 1 bis 3 ist.

In einer bevorzugten Ausführungsform ist in Formel (I)

$R^1$ ein aromatischer Kohlenwasserstoffrest mit mindestens 6 Kohlenstoffatomen oder ein linearer, verzweigter, substituierter oder unsubstituierter aliphatischer Kohlenwasserstoffrest mit mindestens 3, bevorzugt 3 bis 10, Kohlenstoffatomen;

$R^2$ ein linearer, verzweigter, substituierter oder unsubstituierter aliphatischer Kohlenwasserstoffrest mit mindestens 3, bevorzugt 3 bis 16, Kohlenstoffatomen; und

n gleich 1 bis 3;

bevorzugt ist $R^1$ ein aromatischer Kohlenwasserstoffrest mit 6 Kohlenstoffatomen oder ein linearer, verzweigter, substituierter oder unsubstituierter aliphatischer gesättigter Kohlenwasserstoffrest mit mindestens 3, bevorzugt 3 bis 10, Kohlenstoffatomen;

stärker bevorzugt ist die Verbindung ein Ester einer gegebenenfalls substituierten $C_{3-12}$ Monocarbonsäure die mit einem linearen oder verzweigten $C_{3-16}$ Alkylalkohol verestert wurde, insbesondere Hexylhexanoat;

oder ein Ester einer gegebenenfalls substituierten $C_{4-12}$, stärker bevorzugt $C_{6-10}$, Dicarbonsäure die mit einem linearen oder verzweigten $C_{3-16}$ Alkylalkohol verestert wurde, insbesondere ausgewählt aus Bis(2-ethylhexyl)adipat und Diisodecylsebacat;

oder ein Ester einer gegebenenfalls substituierten $C_{5-16}$, stärker bevorzugt $C_{6-10}$; Tricarbonsäure, die mit einem linearen oder verzweigten $C_{3-16}$ Alkylalkohol verestert wurde, insbesondere ausgewählt aus Tris(2-ethylhexyl) O-acetylcitrat, und Tributyl O-acetylcitrat;

oder ein Ester eines mono-, di-, oder tri- substituierten Benzols mit einer Carbonsäuregruppe, das mit einem linearen oder verzweigten $C_{3-16}$ Alkylalkohol verestert wurde, insbesondere Ester von $C_{6-16}$ Alkylalkoholen und Trimesinsäure oder Trimellitsäure, besonders bevorzugt Tris(2-ethylhexyl)trimellitat.

Ist in der vorliegenden Erfindung angegeben, dass eine bestimmte Verbindung oder Rest substituiert sein kann, so werden dabei dem Fachmann bekannte Substituenten verwendet. Insbesondere bevorzugt ist dabei, dass in den Verbindungen ein oder mehrere Wasserstoffatome durch -F, -Cl, -Br, -I, -OH, =O, $-OR^3$, $-OC(=O)R^3$ , $-C(=O)-R^3$, $-NH_2$, $-NHR^3$, $-NR^3_2$ ersetzt sind, wobei $R^3$ einen linearen Alkylrest mit 1 bis 10 Kohlenstoffatomen oder einen verzweigten Alkylrest mit 3 bis 10 Kohlenstoffatomen darstellt. Besonders bevorzugt sind die Substituenten -F, -Cl, $-OR^3$, $-OC(=O)R^3$, und $-C(=O)-R^3$, wobei $R^3$ einen linearen Alkylrest mit 1 bis 10 Kohlenstoffatomen oder einen verzweigten Alkylrest mit 3 bis 10 Kohlenstoffatomen darstellt.

Der Ausdruck "im Wesentlichen aus... bestehen" im Sinne der vorliegenden Erfindung bedeutet, dass die jeweilige Verbindung oder die jeweiligen Verbindungen bezogen auf die gesamte Komponente mehr als 95 Gew.-%, bevorzugt mehr als 98 Gew.-%, stärker bevorzugt mehr als 99 Gew.-%, insbesondere bevorzugt 100 Gew.-% der jeweiligen Komponente ausmachen. Beispielsweise machen 2,4-Toluylendiisocyanat und 2,6-Toluylendiisocyanat mehr als 95 Gew.-%, bevorzugt mehr als 98 Gew.-%, stärker bevorzugt mehr als 99 Gew.-%, insbesondere bevorzugt 100 Gew.-% der Komponente D) aus.

Wird im Folgenden offenbart, dass es sich um die Hydroxylzahl gemäß DIN 53240 handelt, so wird darunter insbesondere die Hydroxylzahl nach DIN 53240-1:2013-06 verstanden.

Komponente A

Die Komponente A1 umfasst Polyetherpolyole, mit einer Hydroxylzahl gemäß DIN 53240-1:2013-06 von mehr als 120 mg KOH/g, insbesondere 130 mg KOH/g bis 220 mg KOH/g, bevorzugt 145 bis 180 mg KOH/g, und gegebenenfalls mit

bevorzugt einer Hydroxyl-Funktionalität von mindestens 2, stärker bevorzugt 2,5 bis 3,5, am stärksten bevorzugt 2 bis 3, und/oder
bevorzugt einem Gehalt an Ethylenoxid von 0,01 bis 59,0 Gew.-%, stärker bevorzugt 1 bis 30 Gew.-%, am stärksten bevorzugt 5 bis 15 Gew.-% und/oder
bevorzugt einem Gehalt an Propylenoxid von 40 bis 99,99 Gew.-%, stärker bevorzugt 70 bis 99,9 Gew.-%, am stärksten bevorzugt 85 bis 95 Gew.-% Wobei in bevorzugten Aspekten die Komponente A1 frei von Carbonateinheiten ist.

Die Herstellung der Verbindungen gemäß A1 kann durch katalytische Addition von einem oder mehreren Alkylenoxiden an H-funktionelle Starterverbindungen erfolgen.

Als Alkylenoxide (Epoxide) können Alkylenoxide mit 2 bis 24 Kohlenstoffatomen eingesetzt werden. Bei den Alkylenoxiden mit 2 bis 24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, Cl-C24-Ester von epoxidierten Fettsäuren, Epichlorhydrin, Glycidol, und Derivate des Glycidols, wie beispielsweise Methylglycidylether, Ethylglycidylether, 2-Ethylhexylglycidylether, Allylglycidylether, Glycidylmethacrylat sowie epoxidfunktionelle Alkyoxysilane, wie beispielsweise 3-Glycidyloxypropyltrimethoxysilan, 3-Glycidyloxypropyltriethoxysilan, 3 -Glycidyloxypropyltripropoxysilan, 3 -Glycidyloxypropylmethyl-dimethoxysilan, 3-Glycidyloxypropylethyldiethoxysilan, 3-Glycidyloxypropyltriisopropoxysilan. Vorzugsweise werden als Alkylenoxide Ethylenoxid und/oder Propylenoxid und/oder 1,2 Butylenoxid eingesetzt. Besonders bevorzugt wird ein Überschuss an Propylenoxid und/oder 1,2-Butylenoxid eingesetzt. Die Alkylenoxide können dem Reaktionsgemisch einzeln, im Gemisch oder nacheinander zugeführt werden. Es kann sich um statistische oder um Block-Copolymere handeln. Werden die Alkylenoxide nacheinander dosiert, so enthalten die hergestellten Produkte (Polyetherpolyole) Polyetherketten mit Blockstrukturen.

Die H-fünktionellen Starterverbindungen weisen Funktionalitäten von ≥ 2 bis ≤ 6 auf und sind vorzugsweise hydroxyfunktionell (OH-funktionell). Beispiele für hydroxyfunktionelle Starterverbindungen sind Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Triethanolamin, Pentaerythrit, Sorbitol, Saccharose, Hydrochinon, Brenzcatechin, Resorcin, Bisphenol F, Bisphenol A, 1,3,5-Trihydroxybenzol, methylolgruppenhaltige Kondensate aus Formaldehyd und Phenol oder Melamin oder Harnstoff. Diese können auch in Mischung verwendet werden. Vorzugsweise wird als Starterverbindung 1,2-Propylenglykol und/oder Glycerin und/oder Trimethylolpropan und/oder Sorbitol eingesetzt, insbesondere 1,2-Propylenglykol und Glycerin.

Komponente A2

Die optionale Komponente A2 umfasst Polyetherpolyole mit einer Hydroxylzahl gemäß DIN 53240 von ≥ 20 mg KOH/g bis ≤ 120 mg KOH/g, vorzugsweise von ≥ 25 bis <112 mg KOH/g und besonders bevorzugt ≥ 30 mg KOH/g bis ≤ 80 mg KOH/g und ist vorzugsweise frei von Carbonateinheiten.

Die Herstellung der Verbindungen gemäß A2 kann durch katalytische Addition von einem oder mehreren Alkylenoxiden an H-funktionelle Starterverbindungen erfolgen.

Als Alkylenoxide (Epoxide) können Alkylenoxide mit 2 bis 24 Kohlenstoffatomen eingesetzt werden. Bei den Alkylenoxiden mit 2 bis 24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, Cl-C24-Ester von epoxidierten Fettsäuren, Epichlorhydrin, Glycidol, und Derivate des Glycidols, wie beispielsweise Methylglycidylether, Ethylglycidylether, 2-Ethylhexylglycidylether, Allylglycidylether, Glycidylmethacrylat sowie epoxidfunktionelle Alkyoxysilane, wie beispielsweise 3-Glycidyloxypropyltrimethoxysilan, 3-Glycidyloxypropyltriethoxysilan, 3 -Glycidyloxypropyltripropoxysilan, 3 -Glycidyloxypropylmethyl-dimethoxysilan, 3-Glycidyloxypropylethyldiethoxysilan, 3-Glycidyloxypropyltriisopropoxysilan. Vorzugsweise werden als Alkylenoxide Ethylenoxid und/oder Propylenoxid und/oder 1,2-Butylenoxid eingesetzt. Besonders bevorzugt wird ein Überschuss an Propylenoxid und/oder 1,2-Butylenoxid eingesetzt. Die Alkylenoxide können dem Reaktionsgemisch einzeln, im Gemisch oder nacheinander zugeführt werden. Es kann sich um statistische oder um Block-Copolymere handeln. Werden die Alkylenoxide nacheinander dosiert, so enthalten die hergestellten Produkte (Polyetherpolyole) Polyetherketten mit Blockstrukturen.

Die H-funktionellen Starterverbindungen weisen Funktionalitäten von ≥ 2 bis ≤ 6 auf und sind vorzugsweise hydroxyfunktionell (OH-funktionell). Beispiele für hydroxyfunktionelle Starterverbindungen sind Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Triethanolamin, Pentaerythrit, Sorbitol, Saccharose, Hydrochinon, Brenzcatechin, Resorcin, Bisphenol F, Bisphenol A, 1,3,5-Trihydroxybenzol, methylolgruppenhaltige Kondensate aus Formaldehyd und Phenol oder Melamin oder Harnstoff. Diese können auch in Mischung verwendet werden. Vorzugsweise wird als Starterverbindung 1,2-Propylenglykol und/oder Glycerin und/oder Trimethylolpropan und/oder Sorbitol eingesetzt, insbesondere Glycerin.

Als H-funktionelle Starterverbindungen kommen bevorzugt solche in Frage, die eine Funktionalität von ≥ 3 bis ≤ 6, besonders bevorzugt von 3 aufweisen, so dass Polyethertriole entstehen. Bevorzugte Starterverbindungen mit einer Funktionalität von 3 sind Glycerin und/oder Trimethylolpropan, besonders bevorzugt ist Glycerin.

Die Polyetherpolyole gemäß A2 weisen einen Gehalt von ≥ 0,1 bis ≤ 99,0 Gew.-%, vorzugsweise von ≥ 10 bis ≤ 90 Gew.-%, besonders bevorzugt ≥ 15 bis ≤ 85 Gew.-% an Ethylenoxid und/oder einen Gehalt von 0,1 bis 99,9 Gew.-%, bevorzugt 10 bis 90 Gew.-%, stärker bevorzugt 15 bis 85 Gew-.% an Propylenoxid auf. Besonders bevorzugt sind die Ethylenoxideinheiten endständig.

In einer besonders bevorzugten Ausführungsform ist die Komponente A2 ein Glyceringestarteter trifunktioneller Polyether mit einem Ethylenoxidanteil von 68 bis 73 Gew.-% und einer OH-Zahl von 35 bis 40 mg KOH/g.

In einer besonderen Ausführungsform weist die Komponente A die folgende Zusammensetzung auf:

A1 80 bis 100 Gew.-Teile, bevorzugt 85 bis 99 Gew.-Teile, stärker bevorzugt 90 bis 95 Gew.-Teile, eines oder mehrerer Polyetherpolyole mit einer Hydroxylzahl gemäß DIN 53240-1:2013-06 von mehr als 120 mg KOH/g, insbesondere 130 mg KOH/g bis 220 mg KOH/g, bevorzugt 145 bis 180 mg KOH/g, und gegebenenfalls
bevorzugt einer Hydroxyl-Funktionalität von mindestens 2, stärker bevorzugt 2,5 bis 3,5, am stärksten bevorzugt 2 bis 3, und/oder
bevorzugt einem Gehalt an Ethylenoxid von 0,01 bis 59,0 Gew.-%, stärker bevorzugt 1 bis 30 Gew.-%, am stärksten bevorzugt 5 bis 15 Gew.-% und/oder
bevorzugt einem Gehalt an Propylenoxid von 40 bis 99,99 Gew.-%, stärker bevorzugt 70 bis 99,9 Gew.-%, am stärksten bevorzugt 85 bis 95 Gew.-%, wobei die Polyetherpolyole A1 vorzugsweise frei von Carbonateinheiten sind,
A2 0 bis 20 Gew.-Teile, bevorzugt 1 bis 15 Gew.-Teile, stärker bevorzugt 5 bis 10 Gew.-Teile eines oder mehrerer Polyetherpolyole mit einer Hydroxylzahl gemäß DIN 53240-1:2013-06 von 20 mg KOH/g bis 120 mg KOH/g, bevorzugt 25 bis 112 mg KOH/g, stärker bevorzugt 35 bis 80 mg KOH/g, bezogen auf die Summe der Gew.-Teile der Komponenten A1 und A2, wobei die Summe der Gewichtsteile A1 + A2 in der Zusammensetzung 100 ergibt.

Komponente B

Als Katalysatoren gemäß der Komponente B1 werden vorzugsweise

a) aliphatische tertiäre Amine (beispielsweise Trimethylamin, Tetramethylbutandiamin, 3-Dimethylaminopropylamin, N,N-Bis(3-dimethylaminopropyl)-N-isopropanolamin), cycloaliphatische tertiäre Amine (beispielsweise 1,4-Diaza(2,2,2)bicyclooctan), aliphatische Aminoether (beispielsweise Bisdimethylaminoethylether, 2-(2-Dimethylaminoethoxy)ethanol und N,N,N-Trimethyl-N-hydroxyethyl-bisaminoethylether), cycloaliphatische Aminoether (beispielsweise N-Ethylmorpholin), aliphatische Amidine, cycloaliphatische Amidine, Harnstoff und Derivate des Harnstoffs (wie beispielsweise Aminoalkylharnstoffe, siehe zum Beispiel EP-A 0 176 013, insbesondere (3-Dimethylaminopropylamin)-harnstoff) und/oder
b) Zinn(II)-Salze von Carbonsäuren

eingesetzt.

Optional werden die Zinn(II)-Salze von Carbonsäuren eingesetzt, wobei die jeweils zugrundeliegende Carbonsäure von 2 bis 24 Kohlenstoffatome aufweist. Beispielsweise werden als Zinn(II)-Salze von Carbonsäuren eine oder mehrere Verbindungen ausgewählt aus der Gruppe bestehend aus Zinn(II)-Salz der 2-Ethylhexansäure (d.h. Zinn(II)-(2-ethylhexanoat) oder Zinnoktoat), Zinn(II)-Salz der 2-Butyloctansäure, Zinn(II)-Salz der 2-Hexyldecansäure, Zinn(II)-Salz der Neodecansäure, Zinn(II)-Salz der Isononansäure, das Zinn(II)-Salz der Ölsäure, Zinn(II)-Salz der Ricinolsäure und Zinn(II)laurat eingesetzt.

In einer bevorzugten Ausführungsform der Erfindung wird mindestens ein Zinn(II)-Salz der Formel (VII)

$$Sn(CxH_{2x+1}COO)_2 \qquad (VII)$$

eingesetzt, wobei x eine ganze Zahl von 8 bis 24, bevorzugt 10 bis 20, besonders bevorzugt von 12 bis 18 bedeutet. Besonders bevorzugt ist in Formel (IX) die Alkylkette $C_xH_{2x+1}$ des Carboxylats eine verzweigte Kohlenstoffkette, d.h. $C_xH_{2x+1}$ ist eine iso-Alkylgruppe.

In einer anderen bevorzugten Ausführungsform der Erfindung wird als Komponente B1

B1.1 ≥ 0,05 bis ≤ 1,5 Gew.-Teilen, bezogen auf die Summe der Gew.-Teile der Komponenten A1 und A2, Harnstoff und/oder Derivate des Harnstoffs und

B1.2 ≥ 0,03 bis ≤ 1,5 Gew.-Teilen, bezogen auf die Summe der Gew.-Teile der Komponenten A1 und A2, anderer Katalysatoren als die der Komponente B1.2, wobei der Gehalt an aminischen Katalysatoren in der Komponente B1.2 bevorzugt maximal 50 Gew.-% bezogen auf Komponente B1 betragen darf, eingesetzt.

Komponente B1.1 umfasst Harnstoff und Derivate des Harnstoffs. Als Derivate des Harnstoffs seien beispielsweise genannt: Aminoalkylharnstoffe, wie z.B. (3-Dimethylaminopropylamin)-harnstoff und 1,3-Bis[3-(dimethylamino)propyl]harnstoff. Es können auch Mischungen von Harnstoff und Harnstoffderivaten eingesetzt werden. Bevorzugt wird ausschließlich Harnstoff in Komponente B1.1 eingesetzt. Die Komponente B1.1 wird in Mengen von ≥ 0,05 bis ≤ 1,5 Gew.-Teilen, bevorzugt von ≥ 0,1 bis ≤ 0,5 Gew.-Teilen, besonders bevorzugt von ≥ 0,25 bis ≤ 0,4 Gew.-Teilen, bezogen auf die Summe der Gew.-Teile der Komponenten A1 bis A2, eingesetzt.

Die Komponente B1.2 wird in Mengen von ≥ 0,03 bis ≤ 1,5 Gew.-Teilen, bevorzugt ≥ 0,03 bis ≤ 0,8 Gew.-Teilen, besonders bevorzugt von ≥ 0,1 bis ≤ 0,65 Gew.-Teilen, ganz besonders bevorzugt von ≥ 0,2 bis ≤ 0,3 Gew.-Teilen, bezogen auf die Summe der Gew.-Teile der Komponenten A1 bis A2, eingesetzt.

Vorzugsweise beträgt der Gehalt an aminischen Katalysatoren in der Komponente B1.2 maximal 50 Gew-% bezogen auf Komponente B1.1, besonders bevorzugt maximal 25 Gew.-% bezogen auf Komponente B1.1. Ganz besonders bevorzugt ist Komponente B1.2 frei von aminischen Katalysatoren. Als Katalysatoren der Komponente B1.2 können z.B. die oben beschriebenen Zinn(II)-Salze von Carbonsäuren eingesetzt werden.

Als in geringen Mengen (s.o.) gegebenenfalls mitzuverwendende aminische Katalysatoren seien genannt: aliphatische tertiäre Amine (beispielsweise Trimethylamin, Tetramethylbutandiamin, 3-Dimethylaminopropylamin, N,N-Bis(3-dimethylaminopropyl)-N-isopropanolamin), cycloaliphatische tertiäre Amine (beispielsweise 1,4-Diaza(2,2,2)bicyclooctan), aliphatische Aminoether (beispielsweise Bisdimethylaminoethylether, 2-(2-Dimethylaminoethoxy)ethanol und N,N,N-Trimethyl-N-hydroxyethyl-bisaminoethylether), cycloaliphatische Aminoether (beispielsweise N-Ethylmorpholin), aliphatische Amidine und cycloaliphatische Amidine.

Geeignete kommerziell erhältliche Katalysatoren (tertiäre Amine) sind unter den Handelsnamen DABCO NE 500, DABCO NE 600, DABCO NE 300 bekannt.

Zu den in B1.2 genannten "aminischen Katalysatoren" gehören nicht Harnstoff oder seine Derivate.

Ein nicht-alkalisches Medium kann vorzugsweise dadurch erreicht werden, dass als Katalysatoren gemäß Komponente B1 Harnstoff und/oder Derivate des Harnstoffs eingesetzt werden, und keine aminischen Katalysatoren eingesetzt werden.

Als Komponente B2 können Hilfs- und Zusatzstoffe eingesetzt werden, wie

a) oberflächenaktive Zusatzstoffe, wie Emulgatoren und Schaumstabilisatoren insbesondere solche mit niedriger Emission wie beispielsweise Produkte der Tegostab®-Serie

b) Additive wie Reaktionsverzögerer (z.B. sauer reagierende Stoffe wie Salzsäure oder organische Säurehalogenide), Zellregler (wie beispielsweise Paraffine oder Fettalkohole oder Dimethylpolysiloxane), Pigmente, Farbstoffe, Flammschutzmittel (verschieden von Komponente K3; wie beispielsweise Ammoniumpolyphosphat), weitere Stabilisatoren gegen Alterungs- und Witterungseinflüsse, Antioxidantien, Weichmacher, fungistatisch und bakteriostatisch wirkende Substanzen, Füllstoffe (wie beispielsweise Bariumsulfat, Kieselgur, Ruß- oder Schlämmkreide) und Trennmittel.

Diese gegebenenfalls mitzuverwendenden Hilfs- und Zusatzstoffe werden beispielsweise in der EP-A 0 000 389, Seiten 18 - 21, beschrieben. Weitere Beispiele von gegebenenfalls erfindungsgemäß mitzuverwendenden Hilfs- und Zusatzstoffen sowie Einzelheiten über Verwendungs- und Wirkungsweise dieser Hilfs- und Zusatzstoffe sind im Kunststoff-Handbuch, Band VII, herausgegeben von G. Oertel, Carl-Hanser-Verlag, München, 3. Auflage, 1993, z.B.

auf den Seiten 104-127 beschrieben. In bevorzugten Aspekten ist die Komponente B2 in weniger als 5 Gew.-Teilen, stärker bevorzugt 0,1 bis 2,5 Gew.-Teilen, bezogen auf 100 Gew.-Teile von A1 + A2 enthalten.

Komponente C

Als Komponente C werden Wasser und/oder physikalische Treibmittel eingesetzt. Als physikalische Treibmittel werden beispielsweise Kohlendioxid und/oder leicht flüchtige organische Substanzen als Treibmittel eingesetzt. Vorzugsweise wird Wasser als Komponente C eingesetzt. In bevorzugten Aspekten ist die Komponente C in weniger als 10 Gew.-Teilen, stärker bevorzugt 0,5 bis 5,5 Gew.-Teilen, bezogen auf 100 Gew.-Teile von A1 + A2 enthalten.

Komponente D

Die Di- und/oder Polyisocyanate der vorliegenden Erfindung bestehen im Wesentlichen aus 2,4-Toluylendiisocyanat und 2,6-Toluylendiisocyanat, bevorzugt mindestens 95 Gew.-%, stärker bevorzugt mindestens 98 Gew.-% 2,4-Toluylendiisocyanat und 2,6-Toluylendiisocyanat.

Gegebenenfalls können weitere Polyisocyanate vorhanden sein. Beispielsweise handelt es sich um solche Polyisocyanate, wie sie in der EP-A 0 007 502, Seiten 7-8, beschrieben werden.

Bevorzugt werden in der Regel die technisch leicht zugänglichen Polyisocyanate, zum Beispiel das 2,4- und 2,6-Toluylendiisocyanat, sowie beliebige Gemische dieser mit Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Vorzugsweise wird eine Mischung von 2,4- und 2,6-Toluylendiisocyanat mit 4,4'- und/oder 2,4'- und/oder 2,2'-Diphenylmethandiisocyanat und Polyphenylpolymethylenpolyisocyanat ("Mehrkern-MDI") eingesetzt. Besonders bevorzugt wird lediglich 2,4- und/oder 2,6-Toluylendiisocyanat eingesetzt.

In einer bevorzugten Ausführungsform des erfindungsgemäßen Verfahrens beträgt die Kennzahl $\geq 70$ bis $\leq 120$. Vorzugsweise liegt die Kennzahl in einem Bereich von $\geq 75$ bis $\leq 115$, besonders bevorzugt $\geq 85$ bis $\leq 105$. Die Kennzahl (Index) gibt das prozentuale Verhältnis der tatsächlich eingesetzten Isocyanat-Menge zur stöchiometrischen, d.h. für die Umsetzung der OH-Äquivalente berechneten Menge an Isocyanat-Gruppen (NCO)-Menge an.

$$\text{Kennzahl} = [\text{Isocyanat-Menge eingesetzt}) : (\text{Isocyanat-Menge berechnet}) \cdot 100 \qquad \text{(II)}$$

In einer bevorzugten Ausführungsform sind in der Komponente D höchstens 26,5 Gew.-% an 2,6-Toluylendiisocyanat enthalten, stärker bevorzugt 20,5 bis 26,5 Gew.-% an 2,6-Toluylendiisocyanat, insbesondere bevorzugt 22,0 bis 26,5 Gew.-% an 2,6-Toluylendiisocyanat, am stärksten bevorzugt 26,5 Gew.-% an 2,6-Toluylendiisocyanat, basierend auf dem Gesamtgewicht der Komponente D.

In einer stärker bevorzugten Ausführungsform werden 2,4-Toluylendiisocyanat und 2,6-Toluylendiisocyanat als eine Mischung mindestens zweier Chargen eingesetzt, wobei die erste Charge 2,4-Toluylendiisocyanat zu 2,6-Toluylendiisocyanat im Verhältnis von 80 Gew.-% zu 20 Gew.-% enthält und die zweite Charge 2,4-Toluylendiisocyanat zu 2,6-Toluylendiisocyanat im Verhältnis von 67 Gew.-% zu 33 Gew.-% enthält, wobei der Anteil an der zweiten Charge höchstens 50 Gew.-%, bevorzugt höchstens 25 Gew.-%, bezogen auf das Gesamtgewicht der ersten und der zweiten Charge beträgt, stärker bevorzugt wobei lediglich die beiden Chargen als Komponente D eingesetzt werden.

In einem bevorzugten Aspekt werden die Komponenten wie folgt eingesetzt:

Komponente A1 in 70 bis 100 Gew.-%, insbesondere 90 Gew.-% oder 100 Gew.-%; und/oder
Komponente A2 in 0 bis 30 Gew.-%, insbesondere 10 Gew.-% oder 0 Gew.-%, wobei die Summe der Komponenten A1 und A2 100 Gew.-% beträgt; und/oder
Komponente B1 in 0,02 bis 0,8 Gew-%, bevorzugt 0,06 bis 0,25 Gew-%, insbesondere bevorzugt 0,22 Gew.-%, bezogen auf 100 Gew.-% von A1; und/oder
Komponente B2 in 0,1 bis 6 Gew.-%, bevorzugt 0,2 bis 1,2 Gew.-%, insbesondere bevorzugt 1,3 Gew.-%, bezogen auf 100 Gew.-% von A1; und/oder
Komponente C in 0,8 bis 3,0 Gew.-%, bevorzugt 1,9 Gew.-%, bezogen auf 100 Gew.-% von A1; und/oder
Komponente E in 2,0 Gew.-% bis 15 Gew-%, bevorzugt 4, 0 bis 12,0 Gew.-%, bezogen auf 100 Gew.-% von A1.

Die mindestens eine Verbindung E wird bevorzugt in einer Menge von 1,0 bis 15,0, stärker bevorzugt 2,5 bis 13,0, insbesondere bevorzugt 4,0 bis 12,0 Gew.-Teile eingesetzt, wobei sich alle Gewichtsteilangaben der Verbindung

E auf 100 Gewichtsteile der Komponente A1 beziehen.

Zur Herstellung der Polyurethanschaumstoffe werden die Reaktionskomponenten bevorzugterweise nach dem an sich bekannten Einstufenverfahren zur Umsetzung gebracht, wobei man sich oft maschineller Einrichtungen bedient, z.B. solcher, die in der EP-A 355 000 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1993, z.B. auf den Seiten 139 bis 265, beschrieben. Die Polyurethanschaumstoffe liegen vorzugsweise als viskoelastische Polyurethanschaumstoffe vor und können als Form- oder auch als Blockschaumstoffe, vorzugsweise als Blockschaumstoffe hergestellt werden. Gegenstand der Erfindung sind daher ein Verfahren zur Herstellung der Polyurethanschaumstoffe, die nach diesen Verfahren hergestellten Polyurethanschaumstoffe, die nach diesen Verfahren hergestellten viskoelastischen Polyurethanblockschaumstoffe bzw. Polyurethanformschaumstoffe, die Verwendung der Polyurethanschaumstoffe zur Herstellung von Formteilen sowie die Formteile selbst.

Bevorzugt weisen die Polyurethanschaumstoffe ein Raumgewicht gemäß DIN EN ISO 845:2009-10 von 40,0 bis 70,0 kg/m$^3$, stärker bevorzugt von 50,0 bis 65,0 kg/m$^3$, auf.

Die nach der Erfindung erhältlichen Polyurethanschaumstoffe vorzugsweise viskoelastische Polyurethanschaumstoffe, finden beispielsweise folgende Anwendung: Matratzen, Kissen, Sitzbezüge, Schuheinlagen, Ohrenstöpsel, Schutzkleidung, Schutzausrüstung oder Schallisolierungen.

## Beispiele

Komponente A:

| | |
|---|---|
| A1-1 | DESMOPHEN 24WB03: Propylenoxid-basiertes Polyolgemisch; hergestellt mittels KOH-Katalyse; Starter: Glycerin sowie 1,2-Propylenglycol; OH-Zahl: 165 mg KOH/g. |

Komponente B:

| | |
|---|---|
| B1-1 | Bis[2-dimethylamino)ethyl]ether (70 Gew.-%) in Dipropylenglykol (30 Gew.-%) (Niax® Catalyst A-1, Momentive Performance Materials, Leverkusen, Deutschland). |
| B1-2 | 1,4-Diazabicyclo[2.2.2]octan (33 Gew.-%) in Dipropylenglykol (67 Gew.-%) (Dabco® 33 LV, Evonik, Essen, Deutschland). |
| B2-1 | Polyethersiloxan-basierender Schaumstoffstabilisator Tegostab® BF 2370 (Evonik, Essen, Deutschland). |
| B2-2 | Polyethersiloxan-basierender Schaumstoffstabilisator Tegostab® BF 2470 (Evonik, Essen, Deutschland). |
| B2-3 | Ortegol® VCO; Zellöffner für viskoelastische Schaumstoffe (Evonik, Essen, Deutschland) . |
| B2-4 | NIAX Silicone L-620; Polyethersiloxan-basierender Schaumstoffstabilisator (Momentive Performance Materials, Leverkusen, Deutschland). |
| B2-5 | NIAX Silicone L-626 Zellöffner für viskoelastische Schaumstoffe (Momentive Performance Materials, Leverkusen, Deutschland). |
| B2-6 | Harnstoff (pur); Pellets; Lieferant: Oqema AG, Mönchengladbach. Anmerkung: Der Harnstoff muss stets in Form einer wässrigen Lösung verarbeitet bzw. dosiert werden. |

Komponente C: Wasser

Komponente D:

| | |
|---|---|
| D-1 | Gemisch aus 2,4- und 2,6-TDI im Gewichtsverhältnis 80: 20 und mit einem NCO-Gehalt von 48 bis 48,2 Gew.-%, kommerziell erhältlich als Desmodur T 80 (Covestro AG). |
| D-2 | Gemisch aus 2,4- und 2,6-TDI im Gewichtsverhältnis 67: 33 und mit einem NCO-Gehalt von 48 bis 48,2 Gew.-%, kommerziell erhältlich als Desmodur T 65 (Covestro AG). |

Komponente E:

| | |
|---|---|
| E-1 | Bis(2-ethylhexyl)adipat, kommerziell erhältlich als Oxsoft DOA |
| E-2 | Hexylhexanoat, bezogen über Sigma-Aldrich |

Herstellung der Polyurethanschaumstoffe

Unter den für die Herstellung von Polyurethanschaumstoffen üblichen Verarbeitungsbedingungen werden die Ausgangskomponenten im Einstufenverfahren mittels Blockverschäumung verarbeitet.

Das Raumgewicht wurde bestimmt gemäß DIN EN ISO 845:2009-10.

Die Stauchhärte (CLD 40 %) wurde bestimmt gemäß DIN EN ISO 3386-1:2015-10
bei einer Verformung von 40 %, 1. bzw. 4. Zyklus.

Die Zugfestigkeit und die Bruchdehnung wurden bestimmt gemäß

DIN EN ISO 1798:2008-04.

Der Druckverformungsrest (DVR 90 %) wurde bestimmt gemäß DIN EN ISO 1856:2008-01 bei 90 % Verformung.

Der Druckverformungsrest (DVR 50 %) wurde bestimmt gemäß DIN EN ISO 1856:2008-01 (22 h, 70 °C) bei 50% Verformung.

In der folgenden Tabelle sind Vergleichsbeispiele als VBsp. und erfindungsgemäße Beispiele als Bsp. angegeben.

Tabelle 1: VBsp. 1 bis 7 und Bsp. 1 bis 4, Fortführung der Tabelle auf der nächsten Seite; pphp = parts per 100 parts polyol

| | Einheit | **VBsp1** | **Bsp1** | **Bsp2** | **Bsp3** | **Bsp4** | **Bsp5** |
|---|---|---|---|---|---|---|---|
| DESMOPHEN 24WB03 | [pphp] | 100 | 100 | 100 | 100 | 100 | 100 |
| Wasser (zugesetzt) | [pphp] | 1,75 | 1,75 | 1,75 | 1,75 | 1,75 | 1,75 |
| Tegostab BF 2370 | [pphp] | 0,60 | 0,60 | 0,60 | 0,60 | 0,60 | 0 |
| Tegostab BF 2470 | [pphp] | 0 | 0 | 0 | 0 | 0 | 0 |
| Ortegol VCO | [pphp] | 0 | 0 | 0 | 0 | 0 | 0 |
| NIAX Silicone L-620 | [pphp] | 0 | 0 | 0 | 0 | 0 | 0 |
| NIAX Silicone L-626 | [pphp] | 0 | 0 | 0 | 0 | 0 | 1,00 |
| Oxsoft DOA | [pphp] | 0 | 10,00 | 8,00 | 0 | 0 | 8,00 |
| Hexylhexanoat | [pphp] | 0 | 0 | 0 | 8,00 | 10,00 | 0 |
| Harnstoff (pur) | [pphp] | 0,39 | 0,39 | 0,39 | 0,39 | 0,39 | 0,39 |
| Dabco 33 LV | [pphp] | 0,45 | 0,45 | 0,45 | 0,45 | 0,45 | 0,45 |
| NIAX Catalyst A-1 | [pphp] | 0,16 | 0,16 | 0,16 | 0,16 | 0,16 | 0,16 |
| | | | | | | | |
| DESMODUR T 80 | [pphp] | 0 | 21,57 | 21,57 | 21,57 | 21,57 | 43,13 |
| DESMODUR T 65 | [pphp] | 43,13 | 21,57 | 21,57 | 21,57 | 21,57 | 0,0 |
| | | | | | | | |
| Wasser gesamt | [pphp] | 1,75 | 1,75 | 1,75 | 1,75 | 1,75 | 1,75 |
| INDEX | [-] | 100,5 | 100,5 | 100,5 | 100,5 | 100,5 | 100,5 |
| | | | | | | | |
| **Mechanische Eigenschaften** | | | | | | | |
| Raumgewicht | [kg/m³] | 52,0 | 56,9 | 55,9 | 61,4 | 59,9 | 49,8 |
| Stauchhärte 40 %; 1. Stauchung | [kPa] | 3,62 | 3,09 | 3,01 | 3,44 | 3,21 | 6,1 |
| Stauchhärte 40 %; 4. Stauchung | [kPa] | 2,63 | 2,42 | 2,36 | 2,79 | 2,6 | 2,64 |
| Druckverformungsrest 50 % | [%] | 2,1 | 1,5 | 1,6 | 2,9 | 3,1 | 7,4 |
| Druckverformungsrest 90 % | [%] | 2,3 | 1,9 | 2,0 | 2,1 | 2,1 | 11,6 |
| Zugfestigkeit | [kPa] | 98 | 58 | 64 | 77 | 69 | 57 |
| Bruchdehnung | [%] | 157 | 143 | 147 | 138 | 124 | 142 |

| | Einheit | **VBsp2** | **VBsp3** | **VBsp4** | **VBsp5** | **VBsp6** | **VBsp7** |
|---|---|---|---|---|---|---|---|
| DESMOPHEN 24WB03 | [pphp] | 100 | 100 | 100 | 100 | 100 | 100 |
| Wasser (zugesetzt) | [pphp] | 1,75 | 1,75 | 1,75 | 1,75 | 1,75 | 1,75 |
| Tegostab BF 2370 | [pphp] | 0 | 0 | 0 | 0 | 0 | 0 |
| Tegostab BF 2470 | [pphp] | 1,00 | 1,00 | 0 | 0 | 0 | 0 |
| Ortegol VCO | [pphp] | 1,00 | 1,00 | 0 | 0 | 0 | 0 |
| NIAX Silicone L-620 | [pphp] | 0 | 0 | 0,50 | 0,50 | 0 | 0 |
| NIAX Silicone L-626 | [pphp] | 0 | 0 | 0,50 | 0,50 | 1,00 | 1,00 |
| Oxsoft DOA | [pphp] | 0 | 0 | 0 | 0 | 0 | 0 |
| Hexylhexanoat | [pphp] | 0 | 0 | 0 | 0 | 0 | 0 |
| Harnstoff (pur) | [pphp] | 0,39 | 0,39 | 0,39 | 0,39 | 0,39 | 0,39 |
| Dabco 33 LV | [pphp] | 0,45 | 0,45 | 0,45 | 0,45 | 0,45 | 0,45 |
| NIAX Catalyst A-1 | [pphp] | 0,16 | 0,16 | 0,16 | 0,16 | 0,16 | 0,16 |

| | | | | | | | |
|---|---|---|---|---|---|---|---|
| DESMODUR T 80 | [pphp] | 43,15 | 21,57 | 43,13 | 21,57 | 43,13 | 21,57 |
| DESMODUR T 65 | [pphp] | 0 | 21,57 | 0 | 21,57 | 0 | 21,57 |
| | | | | | | | |
| Wasser gesamt | [pphp] | 1,75 | 1,75 | 1,75 | 1,75 | 1,75 | 1,75 |
| INDEX | [-] | 100,5 | 100,5 | 100,5 | 100,5 | 100,5 | 100,5 |
| | | | | | | | |
| **Mechanische Eigenschaften** | | | | | | | |
| Raumgewicht | [kg/m³] | k.A. | k.A. | k.A. | k.A. | k.A. | - |
| Stauchhärte 40 %; 1. Stauchung | [kPa] | k.A. | k.A. | k.A. | k.A. | k.A. | - |
| Stauchhärte 40 %; 4. Stauchung | [kPa] | k.A. | k.A. | k.A. | k.A. | k.A. | - |
| Druckverformungsrest 50 % | [%] | k.A. | k.A. | k.A. | k.A. | k.A. | - |
| Druckverformungsrest 90 % | [%] | k.A. | k.A. | k.A. | k.A. | k.A. | - |
| Zugfestigkeit | [kPa] | k.A. | k.A. | k.A. | k.A. | k.A. | - |
| Bruchdehnung | [%] | k.A. | k.A. | k.A. | k.A. | k.A. | - |

Mit den kommerziell erhältlichen Komponenten Ortegol VCO, NIAX Silicone L-620 und L-626 konnten in den von den Herstellern empfohlenen Mengen keine stabilen Schäume mit den Systemen der vorliegenden Erfindung erhalten werden, folglich konnten keine mechanischen Eigenschaften ermittelt werden (k.A. = keine Angabe möglich). Lediglich VBsp 7 zeigte keinen Schrumpf, wies jedoch eine inhomogene Porenstruktur auf, deshalb wurden die mechanischen Eigenschaften ebenfalls nicht ermittelt.

Es konnte gezeigt werden, dass mit den spezifischen Systemen der vorliegenden Erfindung trotz Reduktion oder sogar nicht Verwenden des Desmodur T 65 Anteils stabile Schäume mit äquivalenten Eigenschaften erhalten werden konnten. Enthält die Zusammensetzung einen geringen, erfindungsgemäßen Anteil an Desmodur T 65 so ist die Stabilität des Schaumes verbesserte gegenüber einem Schaum bei dem gar kein Desmodur T 65 verwendet wurde.

## Patentansprüche

**1.** Verfahren zur Herstellung von Polyurethanschaumstoffen durch Umsetzung von

Komponente A) enthaltend eines oder mehrere Polyetherpolyole A1, mit einer Hydroxylzahl gemäß DIN 53240-1:2013-06 von mehr als 120 mg KOH/g,
B) gegebenenfalls

B1) Katalysatoren, und/oder
B2) Hilfs- und Zusatzstoffen

C) Wasser und/oder physikalischen Treibmitteln,
mit
D) Di- und/oder Polyisocyanaten, welche im Wesentlichen aus 2,4-Toluylendiisocyanat und 2,6-Toluylendiisocyanat bestehen;
wobei die Herstellung bei einer Kennzahl von 70 bis 120 erfolgt,
**dadurch gekennzeichnet, dass** die Herstellung in Gegenwart mindestens einer Verbindung E erfolgt, die folgende Formel (I) aufweist:

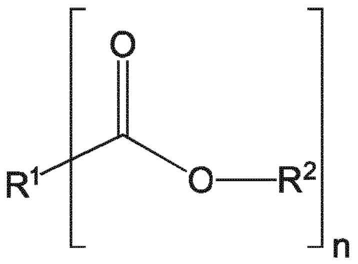

(I)

wobei
$R^1$ ein aromatischer Kohlenwasserstoffrest mit mindestens 5 Kohlenstoffatomen ist oder ein linearer, verzweigter, substituierter oder unsubstituierter aliphatischer Kohlenwasserstoffrest mit mindestens 2, im Falle von verzweigt mindestens 3, Kohlenstoffatomen ist;
$R^2$ ein linearer, verzweigter, substituierter oder unsubstituierter aliphatischer Kohlenwasserstoffrest ist; und
n gleich 1 bis 3 ist.

2. Verfahren gemäß Anspruch 1, **dadurch gekennzeichnet, dass** in Formel (I)

$R^1$ ein aromatischer Kohlenwasserstoffrest mit mindestens 6 Kohlenstoffatomen ist oder ein linearer, verzweigter, substituierter oder unsubstituierter aliphatischer Kohlenwasserstoffrest mit mindestens 3 Kohlenstoffatomen ist;
$R^2$ ein linearer, verzweigter, substituierter oder unsubstituierter aliphatischer Kohlenwasserstoffrest mit mindestens 3 Kohlenstoffatomen ist; und
n gleich 1 bis 3 ist.

3. Verfahren gemäß Anspruch 1 oder 2, **dadurch gekennzeichnet, dass** die Komponente A die folgende Zusammensetzung aufweist:

A1 80 bis 100 Gew.-Teile eines oder mehrerer Polyetherpolyole mit einer Hydroxylzahl gemäß DIN 53240-1:2013-06 von mehr als 120 mg KOH/g,
A2 0 bis 20 Gew.-Teile eines oder mehrerer Polyetherpolyole mit einer Hydroxylzahl gemäß DIN 53240-1:2013-06 von 20 mg KOH/g bis 120 mg KOH/g,
bezogen auf die Summe der Gew.-Teile der Komponenten A1 und A2, wobei die Summe der Gewichtsteile A1 + A2 in der Zusammensetzung 100 ergibt.

4. Verfahren gemäß einem der vorstehenden Ansprüche, **dadurch gekennzeichnet, dass** die mindestens eine Verbindung E in einer Menge von 1,0 bis 15,0 Gew.-Teile eingesetzt wird, wobei sich alle Gewichtsteilangaben der Verbindung E auf 100 Gewichtsteile der Komponenten A1 beziehen.

5. Verfahren gemäß einem der vorstehenden Ansprüche, **dadurch gekennzeichnet, dass** als Komponente B

B1 Katalysatoren wie

a) aliphatische tertiäre Amine, cycloaliphatische tertiäre Amine, aliphatische Aminoether, cycloaliphatische Aminoether, aliphatische Amidine, cycloaliphatische Amidine, Harnstoff und Derivate des Harnstoffs und/oder
b) Zinn(II)-Salze von Carbonsäuren, und

B2 gegebenenfalls Hilfs- und Zusatzstoffe eingesetzt werden.

6. Verfahren gemäß einem der vorstehenden Ansprüche, **dadurch gekennzeichnet, dass** Komponente D mindestens 95 Gew.-% 2,4-Toluylendiisocyanat und 2,6-Toluylendiisocyanat umfasst.

7. Verfahren gemäß einem der vorstehenden Ansprüche, **dadurch gekennzeichnet, dass** in der Komponente D höchstens 26,5 Gew.-% an 2,6-Toluylendiisocyanat enthalten sind, basierend auf dem Gesamtgewicht der Komponente D.

8. Verfahren gemäß Anspruch 7, **dadurch gekennzeichnet, dass** 2,4-Toluylendiisocyanat und 2,6-Toluylendiisocyanat als eine Mischung mindestens zweier Chargen eingesetzt werden wobei die erste Charge 2,4-Toluylendiisocyanat zu 2,6-Toluylendiisocyanat im Verhältnis von 80 Gew.-% zu 20 Gew.-% enthält und die zweite Charge 2,4-Toluylendiisocyanat zu 2,6-Toluylendiisocyanat im Verhältnis von 67 Gew.-% zu 33 Gew.-% enthält, wobei der Anteil an der zweiten Charge höchstens 50 Gew.-% bezogen auf das Gesamtgewicht der ersten und der zweiten Charge beträgt.

9. Polyurethanschaumstoffe, erhältlich durch ein Verfahren gemäß einem der Ansprüche 1 bis 8.

10. Polyurethanschaumstoffe gemäß Anspruch 9, **dadurch gekennzeichnet, dass** es sich um viskoelastische Polyurethanschaumstoffe handelt.

11. Polyurethanschaumstoffe gemäß Anspruch 9 oder 10, **dadurch gekennzeichnet, dass** die Polyurethanschaumstoffe ein Raumgewicht gemäß DIN EN ISO 845:2009-10 von 40,0 bis 70,0 kg/$m^3$ aufweisen.

12. Verwendung der Polyurethanschaumstoffe gemäß einem der Ansprüche 9 bis 11 zur Herstellung von Matratzen, Kissen, Sitzbezügen, Schuheinlagen, Ohrenstöpsel, Schutzkleidung, Schutzausrüstung oder Schallisolierungen.

13. Zweikomponentensystem zur Herstellung von Polyurethanschaumstoffen enthaltend eine erste Komponente K1 umfassend oder bestehend aus:

Komponente A) enthaltend eines oder mehrere Polyetherpolyole A1, mit einer Hydroxylzahl gemäß DIN 53240-1:2013-06 von mehr als 120 mg KOH/g,
B) gegebenenfalls
B1) Katalysatoren, und/oder
B2) Hilfs- und Zusatzstoffen
C) Wasser und/oder physikalischen Treibmitteln, und
E) eine Verbindung, die folgende Formel (I) aufweist:

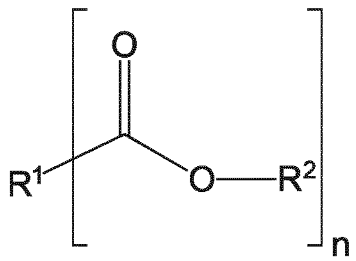
(I)

wobei
$R^1$ ein aromatischer Kohlenwasserstoffrest mit mindestens 5 Kohlenstoffatomen ist oder
ein linearer, verzweigter, substituierter oder unsubstituierter aliphatischer Kohlenwasserstoffrest mit mindestens 2 Kohlenstoffatomen ist;
$R^2$ ein linearer, verzweigter, substituierter oder unsubstituierter aliphatischer Kohlenwasserstoffrest ist; und
n gleich 1 bis 3 ist
und eine zweite Komponente K2 umfassend oder bestehend aus:
D) Di- und/oder Polyisocyanaten, welche im Wesentlichen aus 2,4-Toluylendiisocyanat und 2,6-Toluylendiisocyanat bestehen, wobei die Komponente K1 und die Komponente K2 in einem Verhältnis einer Isocyanat-Kennzahl von 70 bis 120 zueinander vorliegen.

## Claims

1. Process for producing polyurethane foams by reaction of

component A) containing one or more polyether polyols A1 having a hydroxyl number according to DIN 53240-1:2013-06 of more than 120 mg KOH/g,
B) optionally

B1) catalysts and/or
B2) auxiliary and additive substances,
C) water and/or physical blowing agents,
with
D) di- and/or polyisocyanates essentially consisting of tolylene 2,4-diisocyanate and tolylene 2,6-diisocyanate; wherein production is carried out at an index of 70 to 120,
**characterized in that** production is carried out in the presence of at least one compound E having the following formula (I):

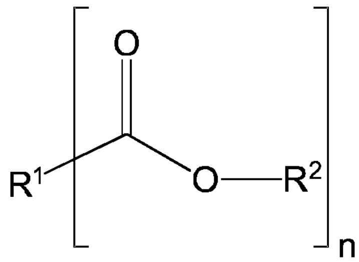
(I)

wherein
$R^1$ is an aromatic hydrocarbon radical having at least 5 carbon atoms or a linear, branched, substituted or unsubstituted aliphatic hydrocarbon radical having at least 2 or, if branched, at least 3 carbon atoms;
$R^2$ is a linear, branched, substituted or unsubstituted aliphatic hydrocarbon radical; and
n is 1 to 3.

2. Process according to Claim 1, **characterized in that** in formula (I)

$R^1$ is an aromatic hydrocarbon radical having at least 6 carbon atoms or a linear, branched, substituted or unsubstituted aliphatic hydrocarbon radical having at least 3 carbon atoms;
$R^2$ is a linear, branched, substituted or unsubstituted aliphatic hydrocarbon radical having at least 3 carbon atoms; and
n is 1 to 3.

3. Process according to Claim 1 or 2, **characterized in that** component A has the following composition:

A1 80 to 100 parts by weight of one or more polyether polyols having a hydroxyl number according to DIN 53240-1:2013-06 of more than 120 mg KOH/g,
A2 0 to 20 parts by weight of one or more polyether polyols having a hydroxyl number according to DIN 53240-1:2013-06 of 20 mg KOH/g to 120 mg KOH/g based on the sum of the parts by weight of components A1 and A2, wherein
the parts by weight of A1 + A2 in the composition sum to 100.

4. Process according to any of the preceding claims, **characterized in that** the at least one compound E is employed in an amount of 1.0 to 15.0 parts by weight, wherein all stated parts by weight of compound E are based on 100 parts by weight of components A1.

5. Process according to any of the preceding claims, **characterized in that** it employs as component B B1 catalysts such as

a) aliphatic tertiary amines, cycloaliphatic tertiary amines, aliphatic amino ethers, cycloaliphatic amino ethers, aliphatic amidines, cycloaliphatic amidines, urea and derivatives of urea and/or
b) tin(II) salts of carboxylic acids and
B2 optionally auxiliary and additive substances.

6. Process according to any of the preceding claims, **characterized in that** component D comprises at least 95% by weight of tolylene 2,4-diisocyanate and tolylene 2,6-diisocyanate.

7. Process according to any of the preceding claims, **characterized in that** component D contains not more than

26.5% by weight of tolylene 2,6-diisocyanate based on the total weight of component D.

**8.** Process according to Claim 7, **characterized in that** tolylene 2,4-diisocyanate and tolylene 2,6-diisocyanate are employed as a mixture of at least two batches, wherein the first batch contains tolylene 2,4-diisocyanate and tolylene 2,6-diisocyanate in a ratio of 80% by weight to 20% by weight and the second batch contains tolylene 2,4-diisocyanate and tolylene 2,6-diisocyanate in a ratio of 67% by weight to 33% by weight, wherein the proportion of the second batch is not more than 50% by weight based on the total weight of the first and the second batch.

**9.** Polyurethane foams obtainable by a process according to any of Claims 1 to 8.

**10.** Polyurethane foams according to Claim 9, **characterized in that** they are viscoelastic polyurethane foams.

**11.** Polyurethane foams according to Claim 9 or 10, **characterized in that** the polyurethane foams have a foam density according to DIN EN ISO 845:2009-10 of 40.0 to 70.0 $kg/m^3$.

**12.** Use of the polyurethane foams according to any of Claims 9 to 11 for producing mattresses, cushions, seat covers, shoe inserts, ear plugs, protective clothing, protective equipment or soundproofing.

**13.** Two-component system for producing polyurethane foams, containing
a first component K1 comprising or consisting of:

component A) containing one or more polyether polyols A1 having a hydroxyl number according to DIN 53240-1:2013-06 of more than 120 mg KOH/g,
B) optionally
B1) catalysts and/or
B2) auxiliary and additive substances,
C) water and/or physical blowing agents and
E) a compound having the following formula (I):

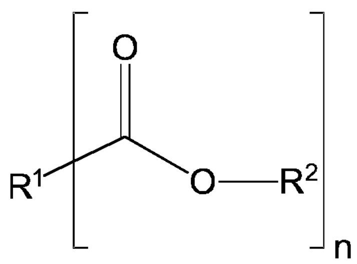

(I)

wherein
$R^1$ is an aromatic hydrocarbon radical having at least 5 carbon atoms or a linear, branched, substituted or unsubstituted aliphatic hydrocarbon radical having at least 2 carbon atoms;
$R^2$ is a linear, branched, substituted or unsubstituted aliphatic hydrocarbon radical; and
n is 1 to 3,
and a second component K2 comprising or consisting of:
D) di- and/or polyisocyanates essentially consisting of tolylene 2,4-diisocyanate and tolylene 2,6-diisocyanate, wherein component K1 and component K2 are present in a ratio to one another corresponding to an isocyanate index of 70 to 120.

## Revendications

**1.** Procédé pour la préparation de mousses de polyuréthane par transformation des composants

A) contenant un ou de plusieurs polyétherpolyols A1, présentant un indice d'hydroxyle selon la norme DIN 53240-1:2013-06 de plus de 120 mg de KOH/g,
B) le cas échéant

B1) des catalyseurs et/ou
B2) des adjuvants et des additifs

C) de l'eau et/ou des agents gonflants physiques avec
D) des diisocyanates et/ou des polyisocyanates qui sont essentiellement constitués de 2,4-diisocyanate de toluylène et de 2,6-diisocyanate de toluylène ;

la préparation ayant lieu à un indice de 70 à 120, **caractérisé en ce que** la préparation est réalisée en présence d'au moins un composé E qui présente la formule (I) suivante :

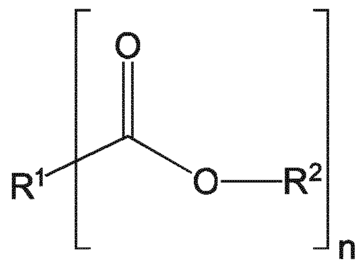
(I)

dans laquelle

$R^1$ représente un radical hydrocarboné aromatique comprenant au moins 5 atomes de carbone ou un radical hydrocarboné aliphatique linéaire, ramifié, substitué ou non substitué comprenant au moins 2, dans le cas d'un radical ramifié au moins 3, atomes de carbone ;
$R^2$ représente un radical hydrocarboné aliphatique linéaire, ramifié, substitué ou non substitué ; et
n vaut 1 à 3.

2. Procédé selon la revendication 1, **caractérisé en ce que**, dans la formule (I),

$R^1$ représente un radical hydrocarboné aromatique comprenant au moins 6 atomes de carbone ou un radical hydrocarboné aliphatique linéaire, ramifié, substitué ou non substitué comprenant au moins 3 atomes de carbone ;
$R^2$ représente un radical hydrocarboné aliphatique linéaire, ramifié, substitué ou non substitué comprenant au moins 3 atomes de carbone ; et
n vaut 1 à 3.

3. Procédé selon la revendication 1 ou 2, **caractérisé en ce que** le composant A présente la composition suivante :

A1 80 à 100 parties en poids d'un ou de plusieurs polyétherpolyols présentant un indice d'hydroxyle selon la norme DIN 53240-12013-06 de plus de 120 mg de KOH/g,
A2 0 à 20 parties en poids d'un ou de plusieurs polyétherpolyols présentant un indice d'hydroxyle selon la norme DIN 53240-1:2013-06 de 20 mg de KOH/g à 120 mg de KOH/g, par rapport à la somme des parties en poids des composants A1 et A2, la somme des parties en poids A1 + A2 dans la composition valant 100.

4. Procédé selon l'une quelconque des revendications précédentes, **caractérisé en ce que** ledit au moins un composé E est utilisé en une quantité de 1,0 à 15,0 parties en poids, toutes les indications de parties en poids du composant E se rapportant à 100 parties en poids du composant A1.

5. Procédé selon l'une quelconque des revendications précédentes, **caractérisé en ce qu'**on utilise, comme composant B

B1 des catalyseurs tels que

a) des amines tertiaires aliphatiques, des amines tertiaires cycloaliphatiques, des aminoéthers aliphatiques, des aminoéthers cycloaliphatiques, des amidines aliphatiques, des amidines cycloaliphatiques, de l'urée et des dérivés de l'urée et/ou
b) des sels d'étain (II) d'acides carboxyliques et

B2 le cas échéant des adjuvants et des additifs.

6. Procédé selon l'une quelconque des revendications précédentes, **caractérisé en ce que** le composant D comprend au moins 95% en poids de 2,4-diisocyanate de toluylène et de 2,6-diisocyanate de toluylène.

7. Procédé selon l'une quelconque des revendications précédentes, **caractérisé en ce que** le composant D contient au plus 26,5% en poids de 2,6-diisocyanate de toluylène, sur la base du poids total du composant D.

8. Procédé selon la revendication 7, **caractérisé en ce que** le 2,4-diisocyanate de toluylène et le 2,6-diisocyanate de toluylène sont utilisés sous forme d'un mélange d'au moins deux charges, la première charge contenant le 2,4-diisocyanate de toluylène et le 2,6-diisocyanate de toluylène dans un rapport de 80% en poids à 20% en poids et la deuxième charge contenant le 2,4-diisocyanate de toluylène et le 2,6-diisocyanate de toluylène dans un rapport de 67% en poids à 33% en poids, la proportion de la deuxième charge représentant au plus 50% en poids par rapport au poids total de la première et de la deuxième charge.

9. Mousses de polyuréthane, pouvant être obtenues par un procédé selon l'une quelconque des revendications 1 à 8.

10. Mousses de polyuréthane selon la revendication 9, **caractérisées en ce qu'**il s'agit de mousses de polyuréthane viscoélastiques.

11. Mousses de polyuréthane selon la revendication 9 ou 10, **caractérisées en ce que** les mousses de polyuréthane présentent une masse volumique apparente selon la norme DIN EN ISO 845:2009-10 de 40,0 à 70,0 kg/$m^3$.

12. Utilisation des mousses de polyuréthane selon l'une quelconque des revendications 9 à 11 pour la fabrication de matelas, de coussins, de revêtements de sièges, de semelles de chaussures, de bouchons pour les oreilles, de vêtements de protection, d'équipements de protection ou d'isolations sonores.

13. Système à deux composants pour la préparation de mousses de polyuréthane contenant un premier composant K1 comprenant ou constitué par :
les composants

A) contenant un ou de plusieurs polyétherpolyols A1, présentant un indice d'hydroxyle selon la norme DIN 53240-1:2013-06 de plus de 120 mg de KOH/g,
B) le cas échéant

B1) des catalyseurs et/ou
B2) des adjuvants et des additifs

C) de l'eau et/ou des agents gonflants physiques et
E) un composé, qui présente la formule (I) suivante :

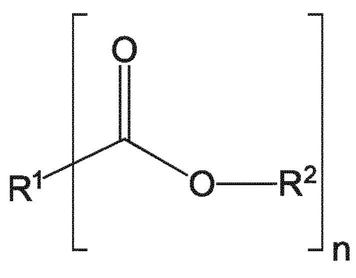

(I)

dans laquelle

$R^1$ représente un radical hydrocarboné aromatique comprenant au moins 5 atomes de carbone ou un radical hydrocarboné aliphatique linéaire, ramifié, substitué ou non substitué comprenant au moins 2 atomes de carbone ;
$R^2$ représente un radical hydrocarboné aliphatique linéaire, ramifié, substitué ou non substitué ; et
n vaut 1 à 3

et un deuxième composant K2 comprenant ou constitué par :
D) des diisocyanates et/ou des polyisocyanates, qui sont essentiellement constitués par du 2,4-diisocyanate de toluylène et du 2,6-diisocyanate de toluylène, le composant K1 et le composant K2 se trouvant dans un rapport d'indice isocyanate de 70 à 120 l'un par rapport à l'autre.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 2015045466 A1
- EP 0176013 A
- EP 0000389 A
- EP 0007502 A
- EP 355000 A


### In der Beschreibung aufgeführte Nicht-Patentliteratur


- **G. OERTEL.** Kunststoff-Handbuch. Carl-Hanser-Verlag, 1993, vol. VII, 104-127
- **VIEWEG ; HÖCHTLEN.** Kunststoff-Handbuch. Carl-Hanser-Verlag, 1993, vol. VII, 139-265